(19) **Europäisches Patentamt European Patent Office Office européen des brevets**

(11) **EP 3 055 256 B1**

(12) **FASCICULE DE BREVET EUROPEEN**

(45) Date de publication et mention
de la délivrance du brevet:
**20.06.2018 Bulletin 2018/25**

(51) Int Cl.:
***C02F 11/12*** *(2006.01)*

(21) Numéro de dépôt: **14796804.4**

(22) Date de dépôt: **08.10.2014**

(86) Numéro de dépôt international:
**PCT/FR2014/052548**

(87) Numéro de publication internationale:
**WO 2015/052434 (16.04.2015 Gazette 2015/15)**

(54) **DISPOSITIF ET PROCÉDÉ D'ÉPAISSISSEMENT DE BOUE**

VORRICHTUNG UND VERFAHREN ZUM EINDICKEN EINES SCHLAMMS

DEVICE AND METHOD FOR THICKENING SLUDGE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.10.2013 FR 1359813**

(43) Date de publication de la demande:
**17.08.2016 Bulletin 2016/33**

(73) Titulaire: **Institut National de Recherche en
Sciences et
Technologies pour l'Environnement et
l'Agriculture
(IRSTEA)
92160 Antony (FR)**

(72) Inventeurs:
• **BAUDEZ, Jean-Christophe
F-03140 Monestier (FR)**
• **HERITIER, Philippe
F-03300 Creuzier le Neuf (FR)**
• **ROUX, Jean-Christophe
F-63122 St Genes Champanelle (FR)**

(74) Mandataire: **Dutreix, Hugues Ours et al
Ipsilon
3, rue Edouard Nignon
44300 Nantes (FR)**

(56) Documents cités:
**FR-A1- 2 255 935          JP-A- 2004 209 410
KR-B1- 100 975 410       US-A- 3 837 494**

**Description**

La présente invention concerne de manière générale le traitement de boues.

Il est souhaitable d'augmenter la concentration en matières sèches des boues liquides générées par les stations d'épuration pour réduire leur volume. Le processus d'augmentation de la concentration est communément appelé épaississement.

Cet épaississement peut se faire simplement par voie gravitaire dans un concentrateur ou par des moyens mécaniques, par exemple par égouttage, flottation, ou centrifugation.

L'épaississement gravitaire est utilisé généralement en zone rurale et concerne les petites stations d'épuration, de taille inférieure à 2 000 équivalent-habitants. L'épaississement dynamique ou mécanique est plus fréquent pour les stations de taille comprise entre 2 000 et 5 000 équivalent-habitants.

On observe cependant que les dispositifs connus de l'état de la technique pour l'épaississement des boues des petites stations présentent un coût important et une faible efficacité puisque de tels dispositifs permettent d'atteindre un niveau de concentration limité à 30g/L, et ce malgré l'utilisation de floculant chimique.

Le document KR100975410 décrit un dispositif de filtrage destiné à la clarification de l'eau. Ce dispositif comprend une cuve de décantation munie d'un filtre pour retenir les matières en suspension dans l'eau.

Le document US3387494 décrit lui aussi un dispositif de clarification d'eau qui se présente sous une forme se rapprochant d'un décanteur lamellaire.

Le document JP2004-209410 décrit un dispositif de concentration de boue qui se présente sous la forme d'une cuve qui comprend un filtre métallique en forme de nid d'abeille, et qui est munie d'un conduit d'amenée d'un mélange de boue et de floculant, et d'un conduit de sortie.

La présente invention a pour but de proposer un nouveau dispositif et procédé correspondant d'épaississement de boues permettant de résoudre tout ou partie des problèmes énoncés ci-dessus, sans avoir recours à des floculants chimiques.

A cet effet, l'invention a pour objet un dispositif d'épaississement de boue comprenant une cuve présentant une entrée pour l'alimentation en boue brute et une sortie pour la vidange de boue épaissie, des moyens d'alimentation en boue brute raccordés à l'entrée de boue brute de la cuve, et des moyens de vidange raccordés à la sortie de boue épaissie de la cuve, caractérisé en ce que ledit dispositif comprend un filtre disposé à l'intérieur de la cuve de manière à séparer le volume de la cuve en un volume inférieur dans lequel débouchent ladite entrée de boue brute et ladite sortie de boue épaissie, et un volume supérieur rempli au moins partiellement par ledit filtre ou délimité au moins partiellement par ledit filtre.

La présence d'un filtre, qui définit un volume inférieur dans lequel débouchent l'entrée et la sortie basses de boue, permet d'alimenter le volume inférieur de la cuve pour obtenir, par ascension de la boue au cours de l'alimentation de la cuve, un épaississement de la boue dans le volume inférieur.

En effet, la boue est amenée à l'aide d'une pompe dans le volume inférieur et s'accumule jusqu'au filtre. Au cours de l'alimentation en boue brute de la cuve, cette boue décante au fond de la cuve de sorte que cette phase de décantation ne salit pas le filtre. Lorsque la boue atteint ledit filtre, celui-ci laisse passer la partie la plus liquide de la boue dans le volume supérieur tandis que la partie plus solide reste confinée dans le volume inférieur. L'alimentation en boue du volume inférieur se poursuit alors que la boue atteint le filtre, ce qui permet de comprimer la boue présente dans la cuve et facilite le travail de séparation liquide/solide opéré par le filtre et permet de comprimer la boue dans le volume inférieur. La boue brute introduite ainsi en partie basse de la cuve se transforme en une boue épaissie que l'on peut évacuer par la suite indépendamment de la partie liquide contenue dans le volume supérieur délimité ou rempli par le filtre et destinée elle-même à être évacuée comme détaillé ci-après.

Une telle conception du dispositif selon l'invention permet ainsi d'augmenter la siccité des boues liquides, en particulier des boues liquides générées par des petites stations d'épuration, c'est-à-dire dont l'équivalent habitant (EH) est inférieure à 2 000 EH.

L'appareil développé permet de produire une boue épaissie à un niveau de concentration de l'ordre de 50g/L, alors que les dispositifs connus de l'état de la technique sont limités à un niveau de concentration de 30g/L. Usuellement, une boue brute, avant épaississement, comprend au moins 3 grammes par litre de matière en suspension, et par exemple entre 5 et 10 grammes par litre de matière en suspension.

En outre comme détaillé ci-après, le fait de procéder à un tel épaississement de boue par ascension des boues dans la cuve jusqu'au filtre permet de se passer de polymère de floculation. Un tel dispositif d'épaississement de boue est particulièrement adapté aux petites stations d'épuration rurales qui n'ont pas la taille suffisante pour investir dans des outils sophistiqués.

Le gain de concentration de boue obtenu grâce à un tel dispositif d'épaississement de boue permet de réduire les volumes de boue à stocker, à transporter et à éliminer. Ainsi, pour une commune qui produirait quotidiennement 20m3 de boue épaissie à 30g/L, elle n'en produirait plus que 12m3, à 50g/L avec le dispositif d'épaississement de boue selon l'invention.

Il résulte aussi de l'utilisation d'un tel dispositif d'épaississement de boue, que les besoins en génie civil pour la construction des silos de stockages sont réduits. Le dispositif d'épaississement de boue selon l'invention est ainsi robuste, de conception simple, mobile, de coût réduit, facile d'utilisation et de maintenance simple.

Enfin, comme détaillé ci-après, le fonctionnement de l'épaississeur peut être entièrement automatisé, via un automate à coût réduit.

Selon l'invention, lesdits moyens d'alimentation comprennent une conduite d'alimentation raccordée à l'entrée de boue brute de la cuve, une pompe pour faire circuler la boue brute dans la conduite d'alimentation vers la cuve, et un capteur de pression situé en aval de la pompe, le dispositif comprenant aussi une unité de pilotage, telle qu'un automate programmable, à laquelle est raccordé ledit capteur de pression, ladite unité étant configurée pour commander l'arrêt de l'alimentation en boue de ladite cuve lorsque la pression mesurée par le capteur de pression est supérieure à une valeur seuil.

L'arrêt de l'alimentation de ladite cuve peut s'effectuer par arrêt de la pompe, en particulier dans le cas où une seule cuve est présente, ou par obturation de l'entrée de boue brute de la cuve et, de préférence, alimentation de l'entrée de boue brute d'une autre cuve.

L'utilisation d'un capteur de pression et de moyens de pilotage d'alimentation en fonction de la pression mesurée, permet un pilotage automatique de l'alimentation en boue brute de la cuve ou d'un ensemble de cuves avec l'alimentation séquentielle des cuves et l'évacuation de boue épaissie d'une cuve en parallèle de l'alimentation en boue brute d'une autre cuve.

Le pilotage de l'alimentation en boue brute en fonction de la pression mesurée permet de limiter ladite pression d'alimentation à ladite pression seuil pour ne pas dégrader le filtre et/ou la qualité de la boue épaissie (c'est-à-dire la concentration en matière de la boue).

Selon l'invention, ladite unité de pilotage est aussi configurée pour réguler le débit d'alimentation en boue brute de la pompe à une valeur de consigne.

Selon l'invention, le dispositif comprend des moyens de détermination de la vitesse de sédimentation de la boue brute et des moyens de détermination de ladite valeur de consigne de débit en fonction de ladite vitesse de sédimentation déterminée. Les moyens de détermination peuvent être réalisés sous forme d'un dispositif spécifique de détermination de vitesse de sédimentation ou sous forme d'une interface d'entrée ou de communication de données permettant à l'unité de pilotage d'acquérir une valeur de vitesse de sédimentation de la boue, obtenue par une analyse séparée, pour piloter la pompe en conséquence.

Le pilotage de l'alimentation est réalisé en déterminant la vitesse de sédimentation de la boue, puis en déterminant à partir de cette vitesse de sédimentation une valeur de débit de consigne auquel le débit de la pompe est asservi par l'unité de pilotage, tant que la pression mesurée reste inférieure ou égale à la pression seuil. La vitesse de sédimentation de la boue peut être déterminée à l'aide de la mesure normative référencée XP T 97-001-2 et intitulée « Essais des boues ». L'Homme du Métier pourra en particulier consulter le passage de cette norme intitulé « Partie 2 : Détermination de la vitesse de sédimentation et de l'aptitude à l'épaississement gravitaire».

La régulation du débit est un mode de réalisation avantageux puisque, en l'absence de régulation du débit, un débit trop important risquerait d'entrainer la matière en suspension à travers le filtre et/ou de dégrader ledit filtre. Mais si le débit est trop faible, le temps d'épaississement de la boue augmente ce qui retarde l'ensemble du procédé de traitement de boue et entraine ainsi une perte de temps inutile qui peut en outre générer des dysfonctionnements.

Il est aussi possible de faire varier la valeur de consigne de débit en la diminuant jusqu'à l'annuler, en fonction de l'épaississement de la boue dans la cuve. L'épaississement de la boue dans la cuve peut se calculer à partir de la quantité de matières sèches entrée.

Selon l'invention, l'unité de pilotage est configurée pour réguler le débit d'alimentation en boue brute de la pompe à une valeur de consigne telle que la vitesse de sédimentation de la boue brute dans la cuve soit supérieure à la vitesse d'alimentation de ladite boue brute dans la cuve.

Bien entendu, l'unité de pilotage peut comprendre en mémoire les dimensions de la cuve pour convertir les valeurs de débit et de vitesse entre elles.

Selon une caractéristique avantageuse de l'invention, le dispositif est dépourvu de moyens d'ajout aux boues de polymère de floculation et/ou de bactéries. Préférentiellement, la ou chaque cuve est dépourvue, en particulier dans la partie inférieure de la cuve de moyens d'aération ou d'injection de fluide autre que l'entrée d'alimentation en boue. En effet de tels moyens créeraient des turbulences qui feraient obstacles à une sédimentation et donc à un épaississement efficace de la boue.

Selon une caractéristique avantageuse de l'invention, le dispositif comprend des moyens de gestion de communication permettant de mettre en communication l'entrée de boue brute de la cuve avec les moyens d'alimentation et d'obturer la communication entre la sortie de boue épaissie de la cuve et les moyens de vidange, et inversement.

Selon une caractéristique avantageuse de l'invention, l'entrée de boue brute et la sortie de boue épaissie présentent au moins une portion commune.

Selon une caractéristique avantageuse de l'invention, le filtre s'étend en travers de la cuve à une distance du fond de la cuve de préférence supérieure à la moitié de la cuve.

Selon une caractéristique avantageuse de l'invention, ledit dispositif comprend des moyens d'évacuation de liquide, appelé filtrat, raccordés à une ouverture ménagée dans le volume supérieur de la cuve.

De tels moyens d'évacuation de filtrat au niveau du volume supérieur permettent d'éliminer la partie la plus liquide de la boue brute, qui a été séparée par le filtre de la partie la plus épaisse de la boue au cours de l'ascension de la boue dans la cuve et ainsi de vidanger ensuite la boue épaissie du volume inférieur séparément de la partie liquide.

Selon une caractéristique avantageuse de l'invention, le dispositif comprend une autre cuve dont l'entrée de boue brute du volume inférieur est raccordée aux moyens d'alimentation en boue brute et dont la sortie de boue épaissie est raccordée aux moyens de vidange de boue épaissie.

La présence d'au moins deux cuves permet d'alterner les phases d'alimentation et d'épaississement de boue dans l'une des cuves et de vidange de boue épaissie dans l'autre cuve.

Avantageusement, ladite autre cuve est aussi raccordée en partie supérieure aux moyens d'évacuation de filtrat. Le dispositif comprend alors des moyens de gestion permettant de sélectionner la cuve dont le filtrat est à évacuer. L'évacuation du filtrat contenu dans la partie supérieure d'une cuve s'effectue en parallèle de l'alimentation en boue brute de la cuve.

Selon une caractéristique avantageuse de l'invention, lesdits moyens de gestion de communication sont configurés pour permettre la mise en communication de l'entrée de boue brute de ladite autre cuve avec les moyens d'alimentation tout en obturant la communication entre la sortie de boue épaissie de ladite autre cuve et les moyens de vidange, et inversement.

Selon une caractéristique avantageuse de l'invention, lorsque lesdits moyens d'alimentation sont mis en communication avec l'une desdites cuves, appelée première cuve, et que la pression mesurée par le capteur dépasse ladite valeur seuil, lesdits moyens de gestion de communication sont configurés pour obturer la communication entre l'entrée de boue brute de ladite cuve et les moyens d'alimentation, et mettre en communication lesdits moyens d'alimentation avec l'entrée de boue brute de l'autre cuve, appelée deuxième cuve,

lesdits moyens de gestion de communication étant de préférence configurés pour obturer la communication entre la sortie de boue épaissie de ladite deuxième cuve et les moyens de vidange de boue épaissie et mettre en communication lesdits moyens de vidange de boue épaissie avec la sortie de boue épaissie de la première cuve.

Il est ainsi possible de vidanger une cuve en temps masqué, c'est-à-dire pendant l'épaississement de boue dans une autre cuve.

Selon une caractéristique avantageuse de l'invention, ledit dispositif comprend un compresseur raccordé à la ou chaque cuve.

L'invention concerne également un procédé d'épaississement de boue à l'aide d'un dispositif tel que décrit ci-dessus :

- mise en communication des moyens d'alimentation avec l'entrée de boue brute de la cuve ou d'une des cuves,
- commande de mise en marche de la pompe pour alimenter en boue brute le volume inférieur de la cuve à une vitesse prédéfinie ou dans une plage de valeurs prédéfinie, à un débit tel que la vitesse de sédimentation de la boue brute soit supérieure à la vitesse d'alimentation de la boue brute dans la cuve,

- arrêt de l'alimentation en boue de ladite cuve, ledit arrêt étant commandé lorsque la pression d'alimentation est supérieure à une valeur seuil de pression prédéfinie (c'est-à-dire lorsque la perte de charge générée par l'ensemble du filtre et du gâteau formé de boue est supérieure à la valeur seuil de pression prédéfinie)
- lorsqu'ils sont présents, activation des moyens d'évacuation de filtrat raccordés à la cuve,
- activation des moyens de vidange de boue épaissie.

Grâce au procédé d'épaississement réalisé à l'aide du dispositif selon l'invention, l'épaississement est réalisé en deux temps. Dans un premier temps la boue est introduite dans la cuve par sa base formée par le fond du volume inférieur, à un débit tel que la vitesse de sédimentation soit supérieure à la vitesse d'écoulement dans la cuve. Une phase de décantation a lieu jusqu'à ce que la boue atteigne le filtre situé délimitant ou formant la partie haute de la cuve.

Dans un deuxième temps, une phase de filtration-compression se produit jusqu'à ce que la perte de charge générée par l'ensemble du filtre et du gâteau formé de boue soit supérieure à la pression d'alimentation seuil. Cet état correspond à une mesure de la pression en aval de la pompe supérieure à une valeur seuil.

Dès lors, l'alimentation du volume inférieur de la cuve cesse et la boue épaissie contenue sous le filtre peut être vidangée par le bas. Avantageusement, un compresseur peut être activé pour accélérer la vidange en mettant la cuve en surpression.

Selon une caractéristique avantageuse de l'invention, l'arrêt de l'alimentation en boue de la cuve s'effectue par mise en communication de l'entrée de boue brute de la chambre inférieure d'une autre cuve avec les moyens d'alimentation.

Selon une caractéristique avantageuse de l'invention, ledit procédé est dépourvu d'étape d'ajout de polymère de floculation et/ou de bactéries dans la boue introduite dans la ou chaque cuve.

Selon une caractéristique avantageuse de l'invention, lors du fonctionnement du dispositif d'épaississement de boue, l'alimentation en boue brute de la ou de chaque cuve est réalisée en continue.

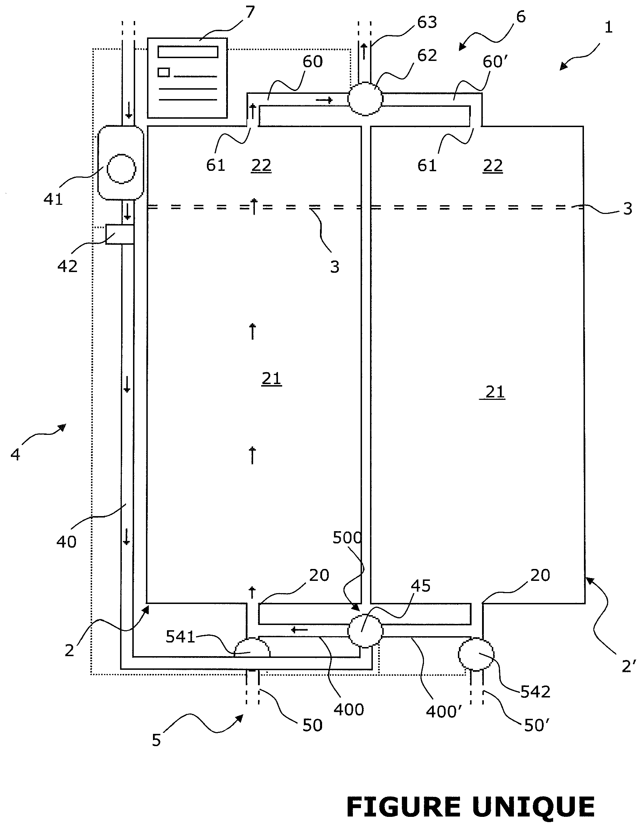

L'invention sera bien comprise à la lecture de la description suivante d'exemples de réalisation, en référence à la figure unique qui est une vue schématique d'un mode de réalisation du dispositif selon l'invention.

En référence à la figure et comme rappelé ci-dessus, l'invention concerne un dispositif 1 d'épaississement de boue. Ledit dispositif comprend une cuve 2 présentant une entrée 20 basse pour l'alimentation en boue brute et une sortie basse pour vidanger la boue épaissie. Dans l'exemple illustré l'entrée et la sortie de boue se font par une même ouverture 20 ménagée au fond de la cuve.

Des moyens d'alimentation 4 en boue brute et des moyens de vidange 5 de boue épaissie sont raccordés chacun à l'ouverture 20 de fond de cuve 2. Un exemple de configuration de ces moyens est détaillé ci-après.

Ledit dispositif comprend un filtre 3 disposé à l'intérieur de la cuve 2. Ledit filtre 3 sépare le volume de la cuve 2 en un volume inférieur encore appelé chambre 21 inférieure dans laquelle débouchent ladite entrée et ladite sortie de boue formées par l'ouverture 20, et un volume supérieur 22 qui peut être rempli au moins partiellement par le filtre ou délimité au moins partiellement par ledit filtre 3.

Dans l'exemple illustré, le filtre 3 est formé par un volume de matière créant un média poreux aux liquides, par exemple de la paille, dont la surface supérieure est située contre ou à proximité du plafond de la cuve, et dont la face inférieure forme la face supérieure du volume inférieur de la cuve. Autrement dit, la face inférieure dudit filtre 3 définit la frontière entre le volume inférieur destiné à être alimenté en boue brute et contenir la boue une fois épaissie, et le volume supérieur destiné à laissé passer la partie la plus liquide de la boue.

Ainsi, on peut prévoir que le filtre soit un volume de paille situé en partie haute de la cuve qui occupe alors ledit volume supérieur et qui laisse le volume inférieur libre d'être alimenté en boue. En variante, on peut aussi prévoir que le filtre soit de type surfacique, tel qu'une membrane, grille ou tamis, laissant passer la partie liquide en partie haute de la cuve mais retenant la boue épaissie en partie basse c'est-à-dire dans la chambre inférieure.

Dans l'exemple illustré à la figure, lesdits moyens 4 d'alimentation comprennent une conduite d'alimentation 40 raccordée à l'entrée 20 de boue brute de la cuve 2, une pompe 41 pour faire circuler les boues brutes dans la conduite 40 d'alimentation vers la cuve, et un capteur de pression 42 situé en aval de la pompe 41.

Lesdits moyens de vidange 5 raccordés à la sortie de boue épaissie de la cuve 2, comprennent une conduite 50 raccordée à la sortie de boue épaissie de la cuve 2.

Le dispositif comprend aussi une unité 7 de pilotage, telle qu'un automate programmable, à laquelle est raccordé ledit capteur de pression 42. Ladite unité 7 est configurée pour commander l'arrêt de la pompe 41 lorsque la pression mesurée par le capteur 42 de pression est supérieure à une valeur seuil. Préférentiellement, ladite unité 7 comprend des moyens de définition et de mémorisation d'une valeur seuil de pression. Lesdits moyens de définition peuvent être formés par une interface homme-machine.

Le dispositif comprend des moyens de gestion 500 de communication permettant de mettre en communication l'ouverture 20 de la cuve avec les moyens d'alimentation 4 et d'obturer la communication entre l'ouverture 20 de la cuve et les moyens 5 de vidange, et inversement de faire communiquer l'ouverture de la cuve 2 avec les moyens de vidange 5 et d'obturer la communication entre l'ouverture 20 de la cuve 2 et les moyens 4 d'alimentation. Lesdits moyens de gestion 500 sont raccordés à l'unité 7 de pilotage.

Le dispositif comprend une autre cuve 2' similaire ou identique à la cuve 2 et dont l'entrée de boue brute de la chambre inférieure 21 est raccordée aux moyens d'alimentation 4 en boue par une branche 400' de la conduite 40 comme détaillé ci-après, et dont la sortie de boue épaissie de la chambre inférieure 21 est raccordée aux moyens 5 de vidange par une conduite 50'. Dans l'exemple, l'entrée de boue brute de la cuve 2' est aussi formée par une ouverture 20 ménagée en fond de cuve qui peut aussi être utilisée en tant que sortie de boue épaissie en étant raccordées aux moyens de vidange 5. Bien entendu, le dispositif peut comprend un plus grand nombre de cuve.

Lesdits moyens de gestion 500 de communication sont configurés pour permettre la mise en communication de l'ouverture 20 de ladite autre cuve 2' avec les moyens d'alimentation 4 tout en obturant la communication entre la sortie de boue épaissie de la cuve 2' et les moyens 5 de vidange, et inversement.

En particulier, la conduite 40 desdits moyens d'alimentation se divise en deux branches 400, 400' l'une raccordée à l'entrée de boue brute de la cuve 2 et l'autre à l'entrée de boue brute de la cuve 2'. En particulier, les moyens de gestion de communication 500 comprennent une vanne 3-voies 45, formant noeud de liaison entre les branches 400, 400', qui permet de diriger les boues vers la cuve 2 ou la cuve 2'.

Chaque conduite 50, 50' est munie d'une électrovanne 541, 542 formant partie desdits moyens de gestion 500 et permettant de libérer ou d'obturer ladite conduite, et ainsi d'autoriser ou non la vidange des boues de la cuve 2 ou de la cuve 2'. Dans l'exemple illustré, les conduites 400, 400' sont raccordées aux conduites 50 et 50' entre l'ouverture 20, 20' de la cuve 2,2' correspondante et l'électrovanne 541, 542 correspondante.

Les électrovannes du dispositif sont raccordées à l'unité de pilotage pour permettre à ladite unité de piloter les opérations d'alimentation et de vidange dans les cuves.

Les électrovannes formant lesdits moyens de gestion 500 peuvent être commandés par l'unité 7 de manière à obturer la communication entre une première cuve 2 et les moyens d'alimentation 4 et mettre en communication la première cuve 2 et les moyens de vidange 5, et de manière à mettre en communication la deuxième cuve 2' et les moyens d'alimentation 4 tout en obturant la communication entre les moyens de vidange 5 et la deuxième cuve 2', et inversement.

Lorsque lesdits moyens d'alimentation 4 sont mis en communication avec l'une 2 desdites cuves et que la pression mesurée par le capteur 42 dépasse ladite valeur seuil, lesdits moyens 500 de gestion de communication sont configurés pour obturer la communication entre l'entrée de boue brute de ladite cuve 2 et les moyens d'alimentation 4 et mettre en communication lesdits moyens d'alimentation 4 avec l'entrée 20 de boue brute de l'autre cuve 2'.

Lesdits moyens de gestion 500 de communication sont aussi configurés pour obturer la communication entre la sortie de boue épaissie de ladite autre cuve 2' et les moyens d'évacuation et mettre en communication lesdits moyens d'évacuation de boue épaissie avec la sortie de boue épaissie de la cuve 2.

Des moyens d'évacuation 6 de filtrat sont aussi raccordés à une ouverture 61 ménagée dans le volume supérieur 22 de chaque cuve 2, 2'.

Lesdits moyens d'évacuation 6 de filtrat comprennent une conduite 63 d'évacuation prolongée par deux branches 60, 60' débouchant respectivement au niveau du volume supérieur 22 des cuves 2, 2' correspondantes, de préférence dans le plafond de la cuve correspondante. Une électrovanne 3 voies 62 est positionnée au noeud de liaison entre la conduite 63 et les branches 60, 60', ce qui permet de gérer l'évacuation de filtrat dans la chambre supérieure 22 des cuves 2, 2'. Avantageusement, lorsque l'une 60 des branches raccordée à l'ouverture 61 d'une cuve 2 est mise en communication avec la conduite d'évacuation 63, la communication est obturée entre l'autre branche 60' raccordée à l'autre cuve 2' et la conduite 63. L'électrovanne 62 est utilisée en particulier dans le cas où la cuve est mise en pression avec un compresseur pour évacuer le filtrat. En l'absence d'une telle mise en pression, on peut prévoir que le dispositif soit dépourvu d'une telle électrovanne.

Avantageusement, ledit dispositif comprend un compresseur raccordé à la ou chaque cuve permettant de mettre la ou chaque cuve en surpression, de préférence sélectivement. Ledit compresseur peut être considéré comme faisant partie des moyens de vidange de boue.

Le dispositif tel que décrit ci-dessus permet de mettre en oeuvre un procédé d'épaississement de boue de la manière suivante. Ledit procédé comprend les étapes suivantes.

Les moyens d'alimentation 4 sont mis en communication avec l'entrée 20 de boue brute de la cuve 2 ou d'une des cuves 2, 2'.

L'unité 7 commande la mise en marche de la pompe 41 pour alimenter en boue brute la chambre inférieure 21 de la cuve 2 à une vitesse prédéfinie ou dans une plage de valeurs prédéfinie.

Ladite unité 7 de pilotage régule le débit d'alimentation en boue brute de la pompe à une valeur de consigne. Ladite valeur de consigne de débit est déterminée en fonction de ladite vitesse de sédimentation.

En particulier, le débit d'alimentation, c'est-à-dire le débit de la pompe, est choisi en fonction des caractéristiques de la boue de telle sorte que la vitesse de sédimentation de la boue dans la cuve soit supérieure à la vitesse d'écoulement de la boue dans la cuve.

Soit $V\_s$ la vitesse de sédimentation de la boue. Alors, le débit d'alimentation $Q\_a$, défini par le produit de la vitesse d'alimentation et de la section de passage S de la boue, doit être tel que :

$$V\_a < V\_s$$

Avec $V\_a = Q\_a / S$
d'où $Q\_a < S \cdot V\_s$.

Le débit d'alimentation de la cuve s'arrête lorsque la pression à l'intérieur de la cuve dépasse la valeur de consigne.

Il se produit ainsi une décantation de la boue introduite dans la cuve 2 jusqu'à ce que la boue décantée atteigne le filtre 3 et qu'un gâteau de boue se forme contre le filtre par compression de sorte que la pression détectée par le capteur est supérieure à la valeur seuil, ce qui entraine l'arrêt de l'alimentation en boue de l'entrée de boue brute de la cuve. Une telle configuration du dispositif permet ainsi d'obtenir une filtration et une compression de la boue poussée par les moyens d'alimentation 4 contre le filtre 3, jusqu'à ce que la perte de charge générée par l'ensemble du filtre et du « gâteau » de boue, soit supérieure à la pression d'alimentation.

L'unité 7 commande l'arrêt de l'alimentation en boue de ladite cuve. Dans le cas où seule la cuve 2 est présente ou si seule la cuve 2 reste ou est destinée à être alimentée, l'unité 7 commande l'arrêt de la pompe 41 lorsque la pression mesurée par le capteur 42 de pression est supérieure ou égale à une valeur seuil. Comme détaillé ci-après, si comme dans l'exemple illustré, au moins deux cuves sont présentes et destinées à être alimentées, l'électrovanne 45 est pilotée pour diriger l'alimentation vers l'autre cuve 2'.

Avantageusement, les électrovannes 541, 542 sont pilotées pour autoriser la vidange de la cuve 2 et empêcher celle de l'autre cuve 2' au cours de son alimentation. Dans ce cas l'arrêt de l'alimentation en boue de la cuve 2 peut s'effectuer par mise en communication de l'entrée 20 de boue brute de la chambre inférieure 21 d'une autre cuve 2' avec les moyens d'alimentation 4. De préférence, l'unité 7 commande l'obturation de la communication entre lesdits moyens d'alimentation 4 et l'entrée de boue brute de la cuve 2 tandis que la sortie de boue épaissie de la chambre inférieure 21 de cette cuve 2 est mise en communication avec les moyens 5 d'évacuation pour évacuer la boue épaissie.

L'unité 7 active ainsi les moyens de vidange 5 de la chambre inférieure de la cuve 2. Le compresseur peut être utilisé pour mettre la cuve en surpression et accélérer ainsi la vidange de ladite chambre inférieure 21 de la cuve.

Autrement dit, le système de gestion de communication est configuré pour commander la vidange de la boue épaissie d'une cuve pendant qu'une autre cuve est alimentée en boue brute.

Ledit procédé est dépourvu d'étape d'ajout de polymère de floculation et/ou de bactéries dans les boues introduites dans la ou chaque cuve 2, 2'.

Lors du fonctionnement du dispositif d'épaississement de boue, l'alimentation en boue brute de la ou de chaque cuve est réalisée en continue, à l'exclusion de l'étape de vidange de boue lorsqu'une seule cuve est présente.

Le domaine d'application concerne de préférence les petites stations de traitement des eaux n'ayant pas les capacités financières suffisantes pour investir dans de coûteux outils de déshydratation mécanique, qu'elles soient urbaines ou industrielles, c'est-à-dire de capacité inférieure à 2 000 EH.

## Revendications

**1.** Dispositif (1) d'épaississement de boue comprenant une cuve (2) présentant une entrée (20) pour l'alimentation en boue brute et une sortie pour la vidange de boue épaissie, des moyens d'alimentation (4) en boue brute raccordés à l'entrée (20) de boue brute de la cuve (2), et des moyens de vidange (5) raccordés à la sortie de boue épaissie de la cuve (2), ledit dispositif comprenant un filtre (3) disposé à l'intérieur de la cuve (2) de manière à séparer le volume de la cuve (2) en un volume inférieur (21) dans lequel débouchent ladite entrée (20) de boue brute et ladite sortie de boue épaissie, et un volume (22) supérieur rempli au moins partiellement par ledit filtre ou délimité au moins partiellement par ledit filtre (3), lesdits moyens (4) d'alimentation comprenant une conduite d'alimentation (40) raccordée à l'entrée (20) de boue brute de la cuve (2), **caractérisé en ce que** lesdits moyens (4) d'alimentation comprennent :

 - une pompe (41) pour faire circuler la boue brute dans la conduite (40) d'alimentation vers la cuve, et
 - un capteur de pression (42) situé en aval de la pompe (41),

le dispositif comprenant aussi une unité (7) de pilotage, telle qu'un automate programmable, à laquelle est raccordé ledit capteur de pression (42), ladite unité (7) étant configurée pour commander l'arrêt de l'alimentation en boue de ladite cuve lorsque la pression mesurée par le capteur (42) de pression est supérieure à une valeur seuil, et **en ce que**, ladite unité (7) de pilotage étant aussi configurée pour réguler le débit d'alimentation en boue brute de la pompe à une valeur de consigne, et le dispositif comprenant des moyens de détermination de la vitesse de sédimentation de la boue brute et des moyens de détermination de ladite valeur de consigne de débit en fonction de ladite vitesse de sédimentation déterminée, l'unité de pilotage est configurée pour réguler le débit d'alimentation en boue brute de la pompe à une valeur de consigne telle que la vitesse de sédimentation de la boue brute dans la cuve soit supérieure à la vitesse d'alimentation de ladite boue brute dans la cuve.

**2.** Dispositif (1) selon la revendication 1, **caractérisé en ce que** le dispositif est dépourvu de moyens d'ajout aux boues de polymère de floculation et/ou de bactéries.

**3.** Dispositif (1) selon l'une des revendications précédentes, **caractérisé en ce que** le dispositif comprend des moyens de gestion (500) de communication permettant de mettre en communication l'entrée (20) de boue brute de la cuve avec les moyens d'alimentation (4) et d'obturer la communication entre la sortie de boue épaissie de la cuve et les moyens (5) de vidange, et inversement.

**4.** Dispositif (1) selon l'une des revendications précédentes, **caractérisé en ce que** l'entrée (20) de boue brute et la sortie de boue épaissie présentent au moins une portion commune.

**5.** Dispositif (1) selon l'une des revendications précédentes, **caractérisé en ce que** le filtre (3) s'étend en travers de la cuve à une distance du fond de la cuve de préférence supérieure à la moitié de la cuve.

**6.** Dispositif (1) selon l'une des revendications précédentes, **caractérisé en ce que** ledit dispositif comprend des moyens d'évacuation (6) de liquide, appelé filtrat, raccordés à une ouverture (61) ménagée dans le volume supérieur (22) de la cuve (2).

**7.** Dispositif (1) selon l'une des revendications précédentes, **caractérisé en ce que** le dispositif comprend une autre cuve (2') dont l'entrée (20) de boue brute du volume inférieur (21) est raccordée aux moyens d'alimentation (4) en boue brute et dont la sortie de boue épaissie est raccordée aux moyens (5) de vidange de boue épaissie.

**8.** Dispositif (1) selon la revendication 7 prise en combinaison de la revendication 3, **caractérisé en ce que** lesdits moyens de gestion (500) de communication sont configurés pour permettre la mise en communication de l'entrée (20) de boue brute de ladite autre cuve (2') avec les moyens d'alimentation (4) tout en obturant la communication entre la sortie de boue épaissie de ladite autre cuve (2') et les moyens (5) de vidange, et inversement.

**9.** Dispositif (1) selon l'une des revendications 7 ou 8 prise en combinaison de la revendication 3, **caractérisé en ce que**, lorsque lesdits moyens d'alimentation (4) sont mis en communication avec l'une (2) desdites cuves, appelée première cuve, et que la pression mesurée par le capteur (42) dépasse ladite valeur seuil, lesdits moyens (500) de gestion de communication sont configurés pour obturer la communication entre l'entrée de boue brute de ladite cuve (2) et les moyens d'alimentation (4) et mettre en communication lesdits moyens d'alimentation (4) avec l'entrée (20) de boue brute de l'autre cuve (2'), appelée deuxième cuve,

lesdits moyens de gestion (500) de communication étant de préférence configurés pour obturer la communication entre la sortie de boue épaissie de la deuxième cuve (2') et les moyens de vidange de boue épaissie et mettre en communication lesdits moyens de vidange de boue épaissie avec la sortie de boue épaissie de la première cuve (2).

10. Dispositif (1) selon l'une des revendications précédentes, **caractérisé en ce que** ledit dispositif comprend un compresseur raccordé à la ou chaque cuve.

11. Procédé d'épaississement de boue à l'aide d'un dispositif (1) selon l'une des revendications précédentes, **caractérisé en ce que** ledit procédé comprend les étapes suivantes :

- mise en communication des moyens d'alimentation (4) avec l'entrée (20) de boue brute de la cuve (2) ou d'une des cuves (2, 2'),
- commande de mise en marche de la pompe (41) pour alimenter en boue brute le volume inférieur (21) de la cuve à une vitesse prédéfinie ou dans une plage de valeurs prédéfinie, à un débit tel que la vitesse de sédimentation de la boue brute soit supérieure à la vitesse d'alimentation de la boue brute dans la cuve, de sorte qu'une phase de décantation a lieu jusqu'à ce que la boue atteigne le filtre en étant suivi d'une phase de filtration-compression;
- arrêt de l'alimentation en boue de ladite cuve (2), ledit arrêt étant commandé lorsque la pression d'alimentation est supérieure à ladite valeur seuil de pression prédéfinie;
- lorsqu'ils sont présents, activation des moyens d'évacuation de filtrat raccordé à la cuve,
- activation des moyens de vidange (5) de boue épaissie.

12. Procédé selon la revendication 11, **caractérisé en ce que** l'arrêt de l'alimentation en boue de la cuve (2) s'effectue par mise en communication de l'entrée (20) de boue brute du volume inférieur (21) d'une autre cuve (2') avec les moyens d'alimentation (4).

13. Procédé selon l'une des revendications 11 à 12, **caractérisé en ce que** ledit procédé est dépourvu d'étape d'ajout de polymère de floculation et/ou de bactéries dans les boues introduites dans la ou chaque cuve (2, 2').

14. Procédé selon l'une des revendications 11 à 13, **caractérisé en ce que**, lors du fonctionnement du dispositif d'épaississement de boue, l'alimentation en boue brute de la ou de chaque cuve (2, 2') est réalisée en continue.

**Patentansprüche**

1. Vorrichtung (1) zum Verdicken von Schlamm, umfassend einen Behälter (2), aufweisend einen Einlass (20) für die Versorgung mit Rohschlamm und einen Auslass für das Entleeren von verdicktem Schlamm, Versorgungsmittel (4) mit Rohschlamm, die mit dem Einlass (20) von Rohschlamm des Behälters (2) verbunden sind, und Entleerungsmittel (5), die mit dem Auslass von verdicktem Schlamm des Behälters (2) verbunden sind,

wobei die Vorrichtung einen Filter (3) umfasst, der im Inneren des Behälters (2) derart angeordnet ist, dass das Volumen des Behälters (2) in ein unteres Volumen (21), in welches der Einlass (20) von Rohschlamm und der Auslass von verdicktem Schlamm ausmünden, und ein oberes Volumen (22), das mindestens zum Teil durch den Filter gefüllt oder mindestens zum Teil durch den Filter (3) begrenzt ist, unterteilt ist,

wobei die Versorgungsmittel (4) eine Versorgungsleitung (40) umfassen, die mit dem Einlass (20) von Rohschlamm des Behälters (2) verbunden ist,

**dadurch gekennzeichnet, dass** die Versorgungsmittel (4) umfassen:

- eine Pumpe (41), damit der Rohschlamm in der Versorgungsleitung (40) zu dem Behälter zirkuliert,
- einen Drucksensor (42), der sich nach der Pumpe (41) befindet,

wobei die Vorrichtung auch eine Steuereinheit (7), wie ein programmierbarer Automat, umfasst, mit welcher der Drucksensor (42) verbunden ist, wobei die Einheit (7) konfiguriert ist, um den Stopp der Versorgung des Behälters mit Schlamm zu befehlen, wenn der von dem Drucksensor (42) gemessene Druck über einem Grenzwert liegt,

und dadurch, dass die Steuereinheit (7) auch konfiguriert ist, um den Versorgungsdurchsatz mit Rohschlamm der Pumpe auf einen Sollwert einzustellen, und die Vorrichtung Bestimmungsmittel der Sedimentierungsgeschwindigkeit des Rohschlamms und Bestimmungsmittel des Durchsatzsollwerts in Abhängigkeit von der bestimmten Sedimentierungsgeschwindigkeit umfasst,

wobei die Steuereinheit konfiguriert ist, um den Versorgungsdurchsatz mit Rohschlamm der Pumpe auf einen Sollwert derart einzustellen, dass die Sedimentierungsgeschwindigkeit des Rohschlamms in dem Behälter höher als die Versorgungsgeschwindigkeit mit Rohschlamm in den Behälter ist.

2. Vorrichtung (1) nach Anspruch 1, **dadurch gekennzeichnet, dass** die Vorrichtung keine Mittel zum Hinzufügen von Flockungspolymer und/oder von Bakterien zu den Schlämmen aufweist.

3. Vorrichtung (1) nach einem der vorangehenden Ansprüche, **dadurch gekennzeichnet, dass** die Vorrichtung Kommunikationsverwaltungsmittel (500) umfasst, die erlauben, den Einlass (20) von Rohschlamm des Behälters mit den Versorgungsmitteln (4) in Kommunikation zu versetzen und die Kommunikation zwischen dem Auslass von verdicktem Schlamm des Behälters und den Entleerungsmitteln (5) zu verschließen und umgekehrt.

4. Vorrichtung (1) nach einem der vorangehenden Ansprüche, **dadurch gekennzeichnet, dass** der Einlass (20) von Rohschlamm und der Auslass von verdicktem Schlamm mindestens einen gemeinsamen Abschnitt aufweisen.

5. Vorrichtung (1) nach einem der vorangehenden Ansprüche, **dadurch gekennzeichnet, dass** sich der Filter (3) durch den Behälter in einem Abstand vom Boden des Behälters erstreckt, der vorzugsweise größer als die Hälfte des Behälters ist.

6. Vorrichtung (1) nach einem der vorangehenden Ansprüche, **dadurch gekennzeichnet, dass** die Vorrichtung Ableitungsmittel (6) von Flüssigkeit, als Filtrat bezeichnet, umfasst, die mit einer Öffnung (61) verbunden sind, die in dem oberen Volumen (22) des Behälters (2) ausgebildet ist.

7. Vorrichtung (1) nach einem der vorangehenden Ansprüche, **dadurch gekennzeichnet, dass** die Vorrichtung einen anderen Behälter (2') umfasst, dessen Einlass (20) von Rohschlamm des unteren Volumens (21) mit den Versorgungsmitteln (4) mit Rohschlamm verbunden ist und dessen Auslass von verdicktem Schlamm mit den Entleerungsmittel (5) von verdicktem Schlamm verbunden ist.

8. Vorrichtung (1) nach Anspruch 7, herangezogen in Kombination mit Anspruch 3, **dadurch gekennzeichnet, dass** die Kommunikationsverwaltungsmittel (500) konfiguriert sind, um das Versetzen in Kommunikation des Einlasses (20) von Rohschlamm des anderen Behälters (2') mit den Versorgungsmitteln (4) bei gleichzeitigem Verschluss der Kommunikation zwischen dem Auslass von verdicktem Schlamm des anderen Behälters (2') und den Entleerungsmittel (5) zu erlauben und umgekehrt.

9. Vorrichtung (1) nach einem der Ansprüche 7 oder 8, herangezogen in Kombination mit Anspruch 3, **dadurch gekennzeichnet, dass**, wenn die Versorgungsmittel (4) mit einem (2) der Behälter, als erster Behälter bezeichnet, in Kommunikation versetzt sind, und wenn der von dem Sensor (42) gemessene Druck den Grenzwert überschreitet, die Kommunikationsverwaltungsmittel (500) konfiguriert sind, um die Kommunikation zwischen dem Einlass von Rohschlamm des Behälters (2) und den Versorgungsmitteln (4) zu verschließen und die Versorgungsmittel (4) mit dem Einlass (20) von Rohschlamm des anderen Behälters (2'), als zweiter Behälter bezeichnet, in Kommunikation zu versetzen, wobei die Kommunikationsverwaltungsmittel (500) vorzugsweise konfiguriert sind, um die Kommunikation zwischen dem Auslass von verdicktem Schlamm des zweiten Behälters (2') und den Entleerungsmitteln von verdicktem Schlamm zu verschließen und die Entleerungsmittel von verdicktem Schlamm mit dem Auslass von verdicktem Schlamm des ersten Behälters (2) in Kommunikation zu versetzen.

10. Vorrichtung (1) nach einem der vorangehenden Ansprüche, **dadurch gekennzeichnet, dass** die Vorrichtung einen Kompressor umfasst, der mit dem oder mit jedem Behälter verbunden ist.

11. Verfahren zum Verdicken von Schlamm mit Hilfe einer Vorrichtung (1) nach einem der vorangehenden Ansprüche, **dadurch gekennzeichnet, dass** das Verfahren die folgenden Schritte umfasst:

   - Inkommunikationversetzen der Versorgungsmittel (4) mit dem Einlass (20) von Rohschlamm des Behälters (2) oder eines der Behälter (2, 2'),
   - Befehlen des Ingangsetzens der Pumpe (41), um das untere Volumen (21) des Behälters mit einer vorbestimmten Geschwindigkeit oder innerhalb eines vorbestimmten Wertebereichs mit einem Durchsatz mit Rohschlamm zu versorgen, dass die Sedimentierungsgeschwindigkeit des Rohschlamms höher als die Versorgungsgeschwindigkeit mit Rohschlamm in den Behälter ist, so dass eine Abscheidungsphase stattfindet, bis der Schlamm den Filter erreicht, gefolgt von einer Filtrations-Kompressions-Phase,
   - Stoppen der Versorgung des Behälters (2) mit Schlamm, wobei der Stopp befohlen wird, wenn der Versorgungsdruck über dem vorbestimmten Druckgrenzwert liegt,
   - sofern vorhanden, Aktivieren der mit dem Behälter verbundenen Filtratableitungsmittel,
   - Aktivieren der Entleerungsmittel (5) von verdicktem Schlamm.

12. Verfahren nach Anspruch 11, **dadurch gekennzeichnet, dass** der Stopp der Versorgung des Behälters (2) mit Schlamm durch Inkommunikationversetzen des Einlasses (20) von Rohschlamm des unteren Volumens (21) eines anderen Behälters (2') mit den Versorgungsmitteln (4) erfolgt.

13. Verfahren nach einem der Ansprüche 11 bis 12, **dadurch gekennzeichnet, dass** das Verfahren keinen Schritt des Hinzufügens von Flockungspolymer und/oder von Bakterien zu den in den oder in jeden Behälter (2, 2') eingeleiteten Schlämmen aufweist.

14. Verfahren nach einem der Ansprüche 11 bis 13, **dadurch gekennzeichnet, dass** beim Betrieb der Schlammverdickungsvorrichtung die Versorgung mit Rohschlamm des oder jedes Behälters (2, 2') kontinuierlich erfolgt.

**Claims**

1. A device (1) for thickening sludge comprising a tank (2) having an inlet (20) for supplying raw sludge and an outlet for emptying thickened sludge, raw sludge supply means (4) connected to the raw sludge inlet (20) of the tank (2), and emptying means (5) connected to the thickened sludge outlet of the tank (2), said device comprising a filter (3) arranged inside the tank (2) so as to separate the volume of the tank (2) into a lower volume (21) in which said raw sludge inlet (20) and said thickened sludge outlet emerge, and an upper volume (22) filled at least partially by said filter or delimited at least partially by said filter (3),
said supply means (4) comprising a supply pipe (40) connected to the raw sludge inlet (20) of the tank (2), **characterized in that** said supply means (4) comprise:

    - a pump (41) for circulating the raw sludge in the supply pipe (40) toward the tank, and
    - a pressure sensor (42) located downstream from the pump (41),

the device also comprising a control unit (7), such as a programmable automaton, to which said pressure sensor (42) is connected, said unit (7) being configured to command the stopping of the sludge supply of said tank when the pressure measured by the pressure sensor (42) is above a threshold value, and **in that**, said control unit (7) also being configured to regulate the raw sludge supply flow rate of the pump at a setpoint value, and the device comprising means for determining the sedimentation speed of the raw sludge and means for determining said flow rate setpoint value based on said determined sedimentation speed,
the control unit is configured to regulate the raw sludge supply flow rate of the pump at a setpoint value such that the sedimentation speed of the raw sludge in the tank is greater than the supply speed of said raw sludge in the tank.

2. The device (1) according to claim 1, **characterized in that** the device has no means for adding flocculating polymer and/or bacteria to the sludge.

3. The device (1) according to one of the preceding claims, **characterized in that** the device comprises communication management means (500) making it possible to place the raw sludge inlet (20) of the tank in communication with the supply means (4) and close the communication between the thickened sludge outlet of the tank and the emptying means (5), and vice versa.

4. The device (1) according to one of the preceding claims, **characterized in that** the raw sludge inlet (20) and the thickened sludge outlet have at least one shared portion.

5. The device (1) according to one of the preceding claims, **characterized in that** the filter (3) extends through the tank at a distance from the bottom of the tank preferably greater than half the tank.

6. The device (1) according to one of the preceding claims, **characterized in that** said device comprises liquid discharge means (6), called filtrate, connected to an opening (61) arranged in the upper volume (22) of the tank (2).

7. The device (1) according to one of the preceding claims, **characterized in that** the device comprises another tank (2') whose raw sludge inlet (20) of the lower volume (21) is connected to the raw sludge supply means (4) and whose thickened sludge outlet is connected to the thickened sludge emptying means (5).

8. The device (1) according to claim 7 combined with claim 3, **characterized in that** said communication management means (500) are configured to allow the raw sludge inlet (20) of said other tank (2') to be placed in communication with the supply means (4) while closing the communication between the thickened sludge outlet of said other tank (2') and the emptying means (5), and vice versa.

9. The device (1) according to one of claims 7 or 8 combined with claim 3, **characterized in that**, when said supply means (4) are placed in communication with one (2) of said tanks, called first tank, and the pressure measured by the sensor (42) exceeds said threshold value, said communication management means (500) are configured to close the communication between the raw sludge inlet of said tank (2) and the supply means (4) and to place said supply means (4) in communication with the raw sludge inlet (20) of the other tank (2'), called second tank, said communication management means (500) preferably being configured to close the communication between the thickened sludge outlet of the second tank (2') and the thickened sludge emptying means and to place said thickened sludge emptying means in communication with the thickened sludge outlet of the first tank (2).

10. The device (1) according to one of the preceding claims, **characterized in that** said device comprises a compressor connected to the or each tank.

11. A method for thickening sludge using a device (1) according to one of the preceding claims, **characterized in that** said method comprises the following steps:

- placing the supply means (4) in communication with the raw sludge inlet (20) of the tank (2) or one of the tanks (2, 2'),
- commanding the starting of the pump (41) to supply raw sludge to the lower volume (21) of the tank at a predefined speed or in a predefined range of values, at a flow rate such that the sedimentation speed of the raw sludge is greater than the supply speed of the raw sludge in the tank, such that a decanting phase takes place until the sludge reaches the filter while being followed by a filtration-compression phase;
- stopping the supply of sludge to said tank (2), said stopping being commanded when the supply pressure is above said predefined pressure threshold value;
- when they are present, activating the filtrate discharge means connected to the tank,
- activating the thickened sludge emptying means (5).

12. The method according to claim 11, **characterized in that** the stopping of the supply of sludge to the tank (2) is done by placing the raw sludge inlet (20) of the lower volume (21) of another tank (2') in communication with the supply means (4).

13. The method according to one of claims 11 to 12, **characterized in that** said method has no step for adding a flocculating polymer and/or bacteria into the sludge introduced into the or each tank (2, 2').

14. The method according to one of claims 11 to 13, **characterized in that**, during the operation of the sludge thickening device, the supply of raw sludge for the or each tank (2, 2') is done continuously.

**FIGURE UNIQUE**

**EP 3 055 256 B1**

**RÉFÉRENCES CITÉES DANS LA DESCRIPTION**

**Documents brevets cités dans la description**

- KR 100975410
- US 3387494 A
- JP 2004209410 A